(19) Europäisches Patentamt / European Patent Office / Office européen des brevets

(11) **EP 4 040 544 A1**

(12) **EUROPEAN PATENT APPLICATION**
published in accordance with Art. 153(4) EPC

(43) Date of publication:
**10.08.2022 Bulletin 2022/32**

(21) Application number: **20871117.6**

(22) Date of filing: **31.07.2020**

(51) International Patent Classification (IPC):
**H01M 4/62** (2006.01)      **H01M 50/409** (2021.01)

(52) Cooperative Patent Classification (CPC):
**H01M 4/62; H01M 50/409;** Y02E 60/10; Y02P 70/50

(86) International application number:
**PCT/JP2020/029580**

(87) International publication number:
**WO 2021/065187 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 JP 2019180839**

(71) Applicant: **Zeon Corporation**
**Tokyo 100-8246 (JP)**

(72) Inventor: **OMORI, Shiori**
**Tokyo 100-8246 (JP)**

(74) Representative: **Parchmann, Stefanie**
**Maiwald Patentanwalts- und**
**Rechtsanwaltsgesellschaft mbH**
**Elisenhof**
**Elisenstraße 3**
**80335 München (DE)**

(54) **BINDER COMPOSITION FOR NON-AQUEOUS SECONDARY BATTERY AND METHOD FOR ASSESSING SAME, SLURRY COMPOSITION FOR NON-AQUEOUS SECONDARY BATTERY FUNCTIONAL LAYER, FUNCTIONAL LAYER FOR NON-AQUEOUS SECONDARY BATTERY, BATTERY MEMBER FOR NON-AQUEOUS SECONDARY BATTERY, AND NON-AQUEOUS SECONDARY BATTERY**

(57)    Provided is a binder composition for a non-aqueous secondary battery having excellent aggregation resistance. The binder composition for a non-aqueous secondary battery contains a polymer and water and is accommodated inside a vessel. The number of particles therein having a dielectric relaxation time of not less than 3 ns and not more than 80 ns is $1 \times 10^3$ particles/mL or less.

**Description**

TECHNICAL FIELD

The present disclosure relates to a binder composition for a non-aqueous secondary battery and method of producing the same, a slurry composition for a non-aqueous secondary battery functional layer, a functional layer for a non-aqueous secondary battery, a battery member for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. A non-aqueous secondary battery normally includes battery members for a non-aqueous secondary battery (hereinafter, also referred to simply as "battery members") such as electrodes (positive electrode and negative electrode) and a separator that isolates the positive electrode and the negative electrode from each other and prevents short-circuiting between the positive and negative electrodes.

There are instances in which a member including a functional layer that contains a polymer as a binder and optionally contains particles compounded in order to cause the member to display a desired function (hereinafter, referred to as "functional particles") is used as a battery member.

Specifically, a separator that includes an adhesive layer containing a binder and/or a porous membrane layer containing a binder and non-conductive particles as functional particles on a separator substrate may be used as a separator of a secondary battery. Moreover, an electrode that includes an electrode mixed material layer containing a binder and electrode active material particles as functional particles on a current collector serving as a substrate or an electrode that further includes an adhesive layer and/or a porous membrane layer such as described above on an electrode substrate including an electrode mixed material layer on a current collector may be used as an electrode of a secondary battery.

A functional layer such as mentioned above can be formed by applying, onto a substrate, a slurry composition for a non-aqueous secondary battery functional layer (hereinafter, also referred to simply as a "slurry composition") in which a polymer serving as a binder and optionally included functional particles are dispersed and/or dissolved in a solvent, and then drying the slurry composition, for example. In general, the polymer that serves as a binder is dispersed and/or dissolved in water, is stored in the form of a binder composition for a non-aqueous secondary battery (hereinafter, also referred to simply as a "binder composition") that is accommodated inside a vessel, and is then used to produce a slurry composition.

Aggregates may form in a binder composition due to bacterial growth. Moreover, the viscosity stability of a produced slurry composition may decrease in a situation where a binder composition in which aggregates have formed is used. This may cause coating unevenness when the slurry composition is applied onto a substrate and result in a formed functional layer having insufficient adhesiveness, and thus may lead to poorer battery characteristics in a secondary battery that is produced using a battery member including the functional layer.

For this reason, studies have made in relation to methods of suppressing aggregate formation in a binder composition by controlling the number of bacteria in the binder composition (refer to Patent Literature (PTL) 1).

As one example, PTL 1 discloses a method of inhibiting foreign substances from arising due to growth of bacteria, mold, or the like in a binder composition by using an isothiazoline compound as a preservative. PTL 1 also reports that when the bacteria count in a binder composition has not reached $10^4$ bacteria/mL, this is permissible in a situation in which an electrode is to be produced, for example, but that a bacteria count of less than $10^3$ bacteria/mL enables more stable production of a good electrode.

CITATION LIST

Patent Literature

PTL 1: JP2014-103122A

SUMMARY

(Technical Problem)

However, studies carried out by the inventor have revealed that there are cases in which the degree to which aggregates tend not to form in a binder composition (hereinafter, also referred to as "aggregation resistance") cannot be adequately evaluated even when the binder composition is evaluated using a bacteria count as an indicator.

Moreover, there is still room for improvement of aggregation resistance even in the case of a binder composition that contains an isothiazoline compound as a preservative and that has a bacteria count restricted to less than $10^3$ bacteria/mL as in the conventional technique described above.

Accordingly, one object of the present disclosure is to provide a binder composition for a non-aqueous secondary battery that has excellent aggregation resistance.

Another object of the present disclosure is to provide a slurry composition for a non-aqueous secondary battery functional layer that is produced using this binder composition for a non-aqueous secondary battery.

Another object of the present disclosure is to provide a functional layer for a non-aqueous secondary battery that is formed using this slurry composition for a non-aqueous secondary battery functional layer.

Another object of the present disclosure is to provide a battery member for a non-aqueous secondary battery that includes this functional layer for a non-aqueous secondary battery and a non-aqueous secondary battery that includes this battery member for a non-aqueous secondary battery.

Another object of the present disclosure is to provide a method of evaluating a binder composition for a non-aqueous secondary battery that can evaluate the aggregation resistance of a binder composition for a non-aqueous secondary battery well.

(Solution to Problem)

The inventor conducted diligent investigation with the aim of solving the problem set forth above. The inventor discovered that a binder composition has excellent aggregation resistance when the number of particles having a dielectric relaxation time that is within a specific range is $1 \times 10^3$ particles/mL or less, and, in this manner, completed the present disclosure.

Specifically, the present disclosure aims to advantageously solve the problem set forth above, and a presently disclosed binder composition for a non-aqueous secondary battery comprises a polymer and water and is accommodated inside a vessel, wherein the number of particles having a dielectric relaxation time of not less than 3 ns and not more than 80 ns is $1 \times 10^3$ particles/mL or less. By suppressing the number of particles having a dielectric relaxation time within the specific range set forth above to $1 \times 10^3$ particles/mL or less in a binder composition for a non-aqueous secondary battery that contains a polymer and water and that is accommodated inside a vessel, the binder composition for a non-aqueous secondary battery can be caused to display excellent aggregation resistance. Moreover, by using the presently disclosed binder composition having excellent aggregation resistance, it is possible to produce a slurry composition having excellent viscosity stability.

Note that the "number of particles having a dielectric relaxation time of not less than 3 ns and not more than 80 ns" referred to in the present disclosure can be measured as the number of particles captured at an electrode when an alternating current electric field having any frequency within a range of not less than 2 MHz and not more than 50 MHz is applied to a binder composition for a non-aqueous secondary battery in a flow channel in which electrodes are installed. For example, the "number of particles having a dielectric relaxation time of not less than 3 ns and not more than 80 ns" can be measured as the number of particles having a dielectric relaxation time of 20 ns that are captured at an electrode when an alternating current electric field having a frequency of 8 MHz is applied to the binder composition for a non-aqueous secondary battery. Moreover, the dielectric relaxation time $\tau$ (s) of particles for which the relaxation frequency at which the dielectric loss factor reaches a maximum during application of the alternating current electric field is fo (Hz) can be determined by the following formula.

$$\tau = 1/2\pi f_0$$

In the presently disclosed binder composition for a non-aqueous secondary battery, the number of the particles is preferably $1 \times 10^2$ particles/mL or less. By using a binder composition in which the number of particles having a dielectric relaxation time within the specific range set forth above is suppressed to $1 \times 10^2$ particles/mL or less, it is possible to further increase the viscosity stability of a produced slurry composition.

The presently disclosed binder composition for a non-aqueous secondary battery preferably further comprises a preservative. When the binder composition for a non-aqueous secondary battery further contains a preservative, the binder composition for a non-aqueous secondary battery can display even better aggregation resistance.

For the presently disclosed binder composition for a non-aqueous secondary battery, it is preferable that the vessel includes a foreign substance contamination prevention film having an opening size of 0.5 $\mu$m or less at a ventilation port. By providing a foreign substance contamination prevention film having an opening size of 0.5 $\mu$m or less at a ventilation port of the vessel accommodating the binder composition for a non-aqueous secondary battery, it is possible to improve the aggregation resistance after post-opening long-term (for example, 6 months or longer) storage of the binder composition for a non-aqueous secondary battery accommodated inside the vessel.

In the presently disclosed binder composition for a non-aqueous secondary battery, the polymer preferably includes either or both of an N-alkylol group-containing monomer unit and a glycidyl group-containing monomer unit. When the polymer includes either or both of an N-alkylol group-containing monomer unit and a glycidyl group-containing monomer unit, it is possible to improve the aggregation resistance after post-opening long-term storage of the binder composition for a non-aqueous secondary battery accommodated inside the vessel.

Moreover, the present disclosure aims to advantageously solve the problem set forth above, and a presently disclosed slurry composition for a non-aqueous secondary battery functional layer is produced using any one of the binder compositions for a non-aqueous secondary battery set forth above. The presently disclosed slurry composition for a non-aqueous secondary battery functional layer has excellent viscosity stability as a result of being produced using the binder composition for a non-aqueous secondary battery set forth above that has excellent aggregation resistance.

The presently disclosed slurry composition for a non-aqueous secondary battery functional layer can further comprise functional particles. In a case in which the slurry composition set forth above contains functional particles such as an electrode active material or non-conductive particles, for example, the slurry composition can be used to form an electrode mixed material layer or a porous membrane layer.

Furthermore, the present disclosure aims to advantageously solve the problem set forth above, and a presently disclosed functional layer for a non-aqueous secondary battery is formed using any one of the slurry compositions for a non-aqueous secondary battery functional layer set forth above. In a situation in which the slurry composition set forth above that has excellent viscosity stability is used to form a functional layer, coating unevenness has a low tendency to occur during application of the slurry composition onto a substrate. Consequently, the presently disclosed functional layer for a non-aqueous secondary battery has excellent adhesiveness.

Also, the present disclosure aims to advantageously solve the problem set forth above, and a presently disclosed battery member for a non-aqueous secondary battery comprises the functional layer for a non-aqueous secondary battery set forth above. The presently disclosed battery member for a non-aqueous secondary battery can cause a secondary battery to display excellent battery characteristics as a result of including the functional layer set forth above that has excellent adhesiveness.

Moreover, the present disclosure aims to advantageously solve the problem set forth above, and a presently disclosed non-aqueous secondary battery comprises the battery member for a non-aqueous secondary battery set forth above. The presently disclosed non-aqueous secondary battery has excellent battery characteristics and high performance as a result of including the battery member set forth above.

Furthermore, the present disclosure aims to advantageously solve the problem set forth above, and a presently disclosed method of evaluating a binder composition for a non-aqueous secondary battery comprises a step of measuring the number of particles having a dielectric relaxation time of not less than 3 ns and not more than 80 ns in a binder composition for a non-aqueous secondary battery. By measuring the number of particles having a dielectric relaxation time of not less than 3 ns and not more than 80 ns in a binder composition, it is possible to evaluate the aggregation resistance of the binder composition well.

Note that in the present specification, a functional layer that contains a binder and electrode active material particles is referred to as an "electrode mixed material layer", a functional layer that contains a binder and non-conductive particles is referred to as a "porous membrane layer", and a functional layer that contains a binder but does not contain electrode active material particles and non-conductive particles is referred to as an "adhesive layer".

(Advantageous Effect)

According to the present disclosure, it is possible to provide a binder composition for a non-aqueous secondary battery that has excellent aggregation resistance.

Moreover, according to the present disclosure, it is possible to provide a slurry composition for a non-aqueous secondary battery functional layer that is produced using this binder composition for a non-aqueous secondary battery.

Furthermore, according to the present disclosure, it is possible to provide a functional layer for a non-aqueous secondary battery that is formed using this slurry composition for a non-aqueous secondary battery functional layer.

Also, according to the present disclosure, it is possible to provide a battery member for a non-aqueous secondary battery that includes this functional layer for a non-aqueous secondary battery and a non-aqueous secondary battery that includes this battery member for a non-aqueous secondary battery.

Moreover, according to the present disclosure, it is possible to provide a method of evaluating a binder composition for a non-aqueous secondary battery that can evaluate the aggregation resistance of a binder composition for a non-aqueous secondary battery well.

DETAILED DESCRIPTION

The following provides a detailed description of embodiments of the present disclosure.

The presently disclosed binder composition for a non-aqueous secondary battery is a binder composition that is for use in production of a non-aqueous secondary battery and can be used, for example, in production of the presently disclosed slurry composition for a non-aqueous secondary battery functional layer. Moreover, the presently disclosed slurry composition for a non-aqueous secondary battery functional layer can be used to form any functional layer (for example, an electrode mixed material layer, a porous membrane layer, or an adhesive layer) having a function such as giving and receiving electrons, reinforcement, or adhesion inside a non-aqueous secondary battery. Furthermore, the presently disclosed functional layer for a non-aqueous secondary battery is formed from the presently disclosed slurry composition for a non-aqueous secondary battery functional layer. Also, the presently disclosed battery member for a non-aqueous secondary battery includes the presently disclosed functional layer for a non-aqueous secondary battery. Moreover, the presently disclosed non-aqueous secondary battery includes the presently disclosed battery member for a non-aqueous secondary battery. Furthermore, the presently disclosed method of evaluating a binder composition for a non-aqueous secondary battery can be used to evaluate the aggregation resistance of the presently disclosed binder composition for a non-aqueous secondary battery.

(Binder composition for non-aqueous secondary battery)

The presently disclosed binder composition contains a polymer and water and is accommodated inside a vessel. In the presently disclosed binder composition, the number of particles having a dielectric relaxation time of not less than 3 ns and not more than 80 ns is $1 \times 10^3$ particles/mL or less.

The presently disclosed binder composition has excellent aggregation resistance as a result of the number of particles having a dielectric relaxation time within the specific range set forth above being $1 \times 10^3$ particles/mL or less.

Although it is not clear why excellent aggregation resistance is achieved by a binder composition in which the number of particles having a dielectric relaxation time within the specific range set forth above is $1 \times 10^3$ particles/mL or less, the reason for this is presumed to be as follows.

Firstly, there are instances in which a bacteria count such as a viable bacteria count is used as an indicator for evaluating the aggregation resistance of a binder composition as in the previously described conventional technique. The bacteria count in a binder composition can be measured by, for example, inoculating and culturing a specimen of the binder composition in a medium and then calculating the bacteria count from the number, density, etc. of colonies of bacteria that are formed. However, measurement of a bacteria count in this manner is not thought to enable adequate detection of bacteria and other components that contribute to aggregate formation. For this reason, it is presumed that bacteria and other components contributing to aggregate formation cannot be sufficiently reduced even when the bacteria count measured by the above-described method is suppressed to $10^3$ bacteria/mL or less, for example, which has made it difficult to inhibit aggregate formation well in a binder composition.

On the other hand, it is thought that by measuring the number of particles having a dielectric relaxation time of not less than 3 ns and not more than 80 ns, bacteria and other components that could not be detected in the bacteria count measurement described above can be detected as particles having a dielectric relaxation time within this specific range. Therefore, it is presumed that by suppressing the number of particles having a dielectric relaxation time within the specific range set forth above to $1 \times 10^3$ particles/mL or less, it is possible to sufficiently reduce bacteria and other components that contribute to aggregation in a binder composition and to obtain a binder composition having excellent aggregation resistance.

As a result of having excellent aggregation resistance, the presently disclosed binder composition can produce a slurry composition having excellent viscosity stability. Moreover, as a result of having excellent viscosity stability, a slurry composition produced using the presently disclosed binder composition can form a functional layer having excellent adhesiveness. Furthermore, by using a battery member that includes a functional layer having excellent adhesiveness in a secondary battery, it is possible to cause the secondary battery to display excellent battery characteristics.

<Polymer>

The polymer in the binder composition is a component that can function as a binder and that, in a functional layer formed using a slurry composition that contains the binder composition, holds components such as functional particles so that they do not detach from the functional layer and enables adhesion of battery members through the functional layer.

<<Type of polymer>>

The polymer may be any polymer that can be used as a binder in a secondary battery.

For example, the polymer may be a water-soluble polymer that can be present in a dissolved state in a binder composition that contains water or may be a particulate polymer that is water-insoluble and can be present in a dispersed state in a binder composition that contains water. Moreover, the presently disclosed binder composition may contain one type of polymer or may contain two or more types of polymers.

Note that when a polymer is said to be "water-soluble" in the present disclosure, this means that when 0.5 g of the polymer is dissolved in 100 g of water at 25°C, insoluble content is less than 0.5 mass%. Also note that when a polymer is said to be "water-insoluble" in the present disclosure, this means that when 0.5 g of the polymer is dissolved in 100 g of water at 25°C, insoluble content is 90 mass% or more.

Although the following describes, as one example, a case in which the polymer is a particulate polymer, the present disclosure is not limited thereto.

An acrylic polymer or a conjugated diene polymer can preferably be used as the particulate polymer from a viewpoint of sufficiently ensuring adhesiveness of a functional layer and battery characteristics such as cycle characteristics of a secondary battery, but the particulate polymer is not specifically limited thereto. Moreover, it is more preferable that an acrylic polymer is used as the particulate polymer from a viewpoint of improving aggregation resistance after post-opening long-term storage of the binder composition accommodated inside the vessel.

[Acrylic polymer]

The acrylic polymer is a polymer that includes a (meth)acrylic acid ester monomer unit. The acrylic polymer may also include repeating units other than a (meth)acrylic acid ester monomer unit (i.e., other repeating units).

Note that in the present disclosure, "(meth)acryl" is used to indicate "acryl" and/or "methacryl". Moreover, the phrase "includes a monomer unit" as used in the present disclosure means that "a polymer obtained with the monomer includes a repeating unit derived from the monomer".

-(Meth)acrylic acid ester monomer unit-

Examples of (meth)acrylic acid ester monomers that can form a (meth)acrylic acid ester monomer unit include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. These (meth)acrylic acid ester monomers may be used individually or as a combination of two or more types.

The proportional content of (meth)acrylic acid ester monomer units in the acrylic polymer when the amount of all repeating units included in the acrylic polymer is taken to be 100 mass% is preferably more than 50 mass%, more preferably 65 mass% or more, even more preferably 80 mass% or more, and particularly preferably 90 mass% or more, and is preferably 99 mass% or less, and more preferably 98 mass% or less. When the proportional content of (meth)acrylic acid ester monomer units in the acrylic polymer is within any of the ranges set forth above, flexibility of the acrylic polymer can be sufficiently ensured, and adhesiveness of a functional layer and battery characteristics such as cycle characteristics of a secondary battery can be further improved.

-Other repeating units-

No specific limitations are placed on other repeating units that can optionally be included in the acrylic polymer so long as they are monomer units derived from monomers that are copolymerizable with a (meth)acrylic acid ester monomer such as described above. Examples of such other repeating units include a hydrophilic group-containing monomer unit (carboxy group-containing monomer unit, phosphate group-containing monomer unit, sulfo group-containing monomer unit, hydroxy group-containing monomer unit, etc.), a nitrile group-containing monomer unit, and a cross-linkable monomer unit. Note that no specific limitations are placed on hydrophilic group-containing monomers (carboxy group-containing monomers, phosphate group-containing monomers, sulfo group-containing monomers, hydroxy group-containing monomers, etc.) that can form a hydrophilic group-containing monomer unit, nitrile group-containing monomers that can form a nitrile group-containing monomer unit, and cross-linkable monomers that can form a cross-linkable monomer unit, and any of those described in WO2015/064099A1, for example, can be used.

Although the acrylic polymer may include an "aliphatic conjugated diene monomer unit" or an "aromatic vinyl monomer unit" such as subsequently described in the "Conjugated diene polymer" section, the proportional content of (meth)acrylic acid ester monomer units in the acrylic polymer is normally higher than at least the proportional content of aliphatic conjugated diene monomer units.

The acrylic polymer may include just one type of other repeating unit or may include two or more types of other repeating units.

[Conjugated diene polymer]

The conjugated diene polymer is a polymer that includes an aliphatic conjugated diene monomer unit. Specific examples of the conjugated diene polymer include an aliphatic conjugated diene polymer such as polybutadiene or polyisoprene; an aromatic vinyl-aliphatic conjugated diene copolymer such as a styrene-butadiene polymer (SBR); a vinyl cyanide-conjugated diene copolymer such as an acrylonitrile-butadiene polymer (NBR); hydrogenated SBR; and hydrogenated NBR. Of these conjugated diene polymers, an aromatic vinyl-aliphatic conjugated diene copolymer such as a styrene-butadiene polymer (SBR) is preferable.

The aromatic vinyl-aliphatic conjugated diene copolymer includes an aromatic vinyl monomer unit and an aliphatic conjugated diene monomer unit, and optionally includes repeating units other than an aromatic vinyl monomer unit and an aliphatic conjugated diene monomer unit (i.e., other repeating units).

-Aromatic vinyl monomer unit-

Examples of aromatic vinyl monomers that can form an aromatic vinyl monomer unit include styrene, $\alpha$-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

The proportional content of aromatic vinyl monomer units in the aromatic vinyl-aliphatic conjugated diene copolymer when the amount of all repeating units included in the aromatic vinyl-aliphatic conjugated diene copolymer is taken to be 100 mass% is preferably 35 mass% or more, more preferably 45 mass% or more, and even more preferably 55 mass% or more, and is preferably 80 mass% or less, more preferably 70 mass% or less, and even more preferably 65 mass% or less. When the proportional content of aromatic vinyl monomer units in the aromatic vinyl-aliphatic conjugated diene copolymer is within any of the ranges set forth above, strength and adhesiveness of a functional layer can be sufficiently ensured, and battery characteristics such as cycle characteristics of a secondary battery can be further improved.

-Aliphatic conjugated diene monomer unit-

Examples of aliphatic conjugated diene monomers that can form an aliphatic conjugated diene monomer unit include 1,3-butadiene, 2-methyl-1,3-butadiene, 2,3-dimethyl-1,3-butadiene, 2-chloro-1,3-butadiene, substituted linear conjugated pentadienes, and substituted and branched conjugated hexadienes. One of these aliphatic conjugated diene monomers may be used individually, or two or more of these aliphatic conjugated diene monomers may be used in combination. Of these aliphatic conjugated diene monomers, 1,3-butadiene is preferable.

The proportional content of aliphatic conjugated diene monomer units in the aromatic vinyl-aliphatic conjugated diene copolymer when the amount of all repeating units included in the aromatic vinyl-aliphatic conjugated diene copolymer is taken to be 100 mass% is preferably 20 mass% or more, and more preferably 30 mass% or more, and is preferably 70 mass% or less, more preferably 60 mass% or less, even more preferably 50 mass% or less, and particularly preferably 35 mass% or less. When the proportional content of aliphatic conjugated diene monomer units in the aromatic vinyl-aliphatic conjugated diene copolymer is within any of the ranges set forth above, flexibility and adhesiveness of a functional layer can be sufficiently ensured, and battery characteristics such as cycle characteristics of a secondary battery can be further improved.

-Other repeating units-

No specific limitations are placed on other repeating units that can optionally be included in the aromatic vinyl-aliphatic conjugated diene copolymer so long as they are monomer units derived from monomers that are copolymerizable with an aromatic vinyl monomer and an aliphatic conjugated diene monomer such as described above. Examples of such other repeating units include a hydrophilic group-containing monomer unit (carboxy group-containing monomer unit, phosphate group-containing monomer unit, sulfo group-containing monomer unit, hydroxy group-containing monomer unit, etc.), a nitrile group-containing monomer unit, and a cross-linkable monomer unit. Note that no specific limitations are placed on hydrophilic group-containing monomers (carboxy group-containing monomers, phosphate group-containing monomers, sulfo group-containing monomers, hydroxy group-containing monomers, etc.) that can form a hydrophilic group-containing monomer unit, nitrile group-containing monomers that can form a nitrile group-containing monomer unit, and cross-linkable monomers that can form a cross-linkable monomer unit, and any of those described in WO2015/064099A1, for example, can be used.

Although a conjugated diene polymer such as an aromatic vinyl-aliphatic conjugated diene copolymer may include a "(meth)acrylic acid ester monomer unit" such as previously described in the "Acrylic polymer" section, the proportional content of aliphatic conjugated diene monomer units in the conjugated diene polymer is normally higher than the proportional content of (meth)acrylic acid ester monomer units.

<<N-Alkylol group-containing monomer unit and glycidyl group-containing monomer unit>>

The polymer contained in the presently disclosed binder composition preferably includes either or both of an N-alkylol group-containing monomer unit and a glycidyl group-containing monomer unit. When the polymer includes either or both of an N-alkylol group-containing monomer unit and a glycidyl group-containing monomer unit, it is possible to improve the aggregation resistance after post-opening long-term storage of the binder composition accommodated inside the vessel.

Moreover, it is particularly preferable that the polymer includes both an N-alkylol group-containing monomer unit and a glycidyl group-containing monomer unit. When the polymer includes both an N-alkylol group-containing monomer unit and a glycidyl group-containing monomer unit, it is possible to further improve the aggregation resistance after post-opening long-term storage of the binder composition accommodated inside the vessel.

Note that although the polymer that can include either or both of an N-alkylol group-containing monomer unit and a glycidyl group-containing monomer unit may be a water-soluble polymer or may be an acrylic polymer, conjugated diene polymer, or the like that is a water-insoluble particulate polymer, for example, without any specific limitations, an acrylic polymer is preferable from a viewpoint of further improving aggregation resistance after post-opening long-term storage of the binder composition accommodated inside the vessel.

[N-Alkylol group-containing monomer unit]

The N-alkylol group-containing monomer unit is a repeating unit that is derived from an N-alkylol group-containing monomer.

The carbon number of the N-alkylol group (N-hydroxyalkyl group) in the N-alkylol group-containing monomer unit is not specifically limited but, from a viewpoint of further improving aggregation resistance after post-opening long-term storage of the binder composition accommodated inside the vessel, is preferably not less than 1 and not more than 2, and more preferably 1. In other words, the N-alkylol group is preferably an N-methylol group or an N-ethylol group, and is more preferably an N-methylol group.

Examples of N-alkylol group-containing monomers that can form an N-alkylol group-containing monomer unit include N-methylol group-containing monomers such as N-methylolacrylamide (N-hydroxymethylacrylamide) and N-methylolmethacrylamide (N-hydroxymethylmethacrylamide); and N-ethylol group-containing monomers such as N-ethylolacrylamide (N-hydroxyethylacrylamide) and N-ethylolmethacrylamide (N-hydroxyethylmethacrylamide). Of these N-alkylol group-containing monomers, N-methylol group-containing monomers are preferable from a viewpoint of further improving aggregation resistance after post-opening long-term storage of the binder composition accommodated inside the vessel, and N-methylolacrylamide is more preferable.

The proportional content of N-alkylol group-containing monomer units in the polymer when the amount of all repeating units included in the polymer is taken to be 100 mass% is preferably 0.05 mass% or more, more preferably 0.2 mass% or more, and even more preferably 0.5 mass% or more, and is preferably 3 mass% or less, more preferably 2.5 mass% or less, and even more preferably 2 mass% or less. When the proportional content of N-alkylol group-containing monomer units in the polymer is within any of the ranges set forth above, aggregation resistance after post-opening long-term storage of the binder composition accommodated inside the vessel can be further improved.

[Glycidyl group-containing monomer unit]

The glycidyl group-containing monomer unit is a repeating unit that is derived from a glycidyl group-containing monomer.

Examples of glycidyl group-containing monomers that can form a glycidyl group-containing monomer unit include allyl glycidyl ether and glycidyl (meth)acrylate. Of these glycidyl group-containing monomers, allyl glycidyl ether is preferable from a viewpoint of further improving aggregation resistance after post-opening long-term storage of the binder composition accommodated inside the vessel.

The proportional content of glycidyl group-containing monomer units in the polymer when the amount of all repeating units included in the polymer is taken to be 100 mass% is preferably 0.05 mass% or more, more preferably 0.2 mass% or more, and even more preferably 0.5 mass% or more, and is preferably 3 mass% or less, more preferably 2.5 mass% or less, and even more preferably 2 mass% or less. When the proportional content of glycidyl group-containing monomer units in the polymer is within any of the ranges set forth above, aggregation resistance after post-opening long-term storage of the binder composition accommodated inside the vessel can be further improved.

<<Tetrahydrofuran-insoluble content of polymer>>

The THF-insoluble content of the polymer is preferably 10 mass% or more, more preferably 50 mass% or more, and even more preferably 80 mass% or more, and is preferably 95 mass% or less. When the THF-insoluble content of the polymer is 10 mass% or more, the polymer can be inhibited from eluting into electrolyte solution when present in a functional layer inside a secondary battery, and battery characteristics such as cycle characteristics of a secondary battery can be further improved. Moreover, a polymer having a THF-insoluble content of 95 mass% or less is easy to produce, which enables efficient production of a binder composition containing the polymer.

Note that the THF-insoluble content of the polymer can be adjusted by altering the chemical composition of monomers of the polymer (types and ratio of used monomers) and polymerization conditions of the polymer (used amount of molecular weight modifier, reaction temperature, reaction time, etc.).

<Number of particles having dielectric relaxation time within specific range>

In the presently disclosed binder composition, the number of particles having a dielectric relaxation time of not less than 3 ns and not more than 80 ns (i.e., the number of particles captured at an electrode when an alternating current electric field having any frequency within a range of not less than 2 MHz and not more than 50 MHz is applied in a flow channel having electrodes installed therein) is required to be $1 \times 10^3$ particles/mL or less, and is preferably $1 \times 10^2$ particles/mL or less. When the number of particles having a dielectric relaxation time of not less than 3 ns and not more than 80 ns in the binder composition exceeds $1 \times 10^3$ particles/mL, the aggregation resistance of the binder composition decreases. On the other hand, when the number of particles having a dielectric relaxation time of not less than 3 ns and not more than 80 ns in the binder composition is not more than the specific value set forth above, the binder composition can display sufficient aggregation resistance. Moreover, when the number of particles having a dielectric relaxation time of not less than 3 ns and not more than 80 ns in the binder composition is $1 \times 10^2$ particles/mL or less, the viscosity stability of a slurry composition produced using the binder composition can be further increased.

Furthermore, in presently disclosed binder composition, the number of particles having a dielectric relaxation time of not less than 16 ns and not more than 32 ns (i.e., the number of particles captured at an electrode when an alternating current electric field having any frequency within a range of not less than 5 MHz and not more than 10 MHz is applied in a flow channel having electrodes installed therein) is preferably $1 \times 10^3$ particles/mL or less, and more preferably $1 \times 10^2$ particles/mL or less. When the number of particles having a dielectric relaxation time of not less than 16 ns and not more than 32 ns in the binder composition is not more than the specific value set forth above, the aggregation resistance of the binder composition can be further increased. Moreover, when the number of particles having a dielectric relaxation time of not less than 16 ns and not more than 32 ns in the binder composition is $1 \times 10^2$ particles/mL or less, the viscosity stability of a slurry composition produced using the binder composition can be even further increased.

Note that the number of particles having a dielectric relaxation time of not less than 3 ns and not more than 80 ns and/or the number of particles having a dielectric relaxation time of not less than 16 ns and not more than 32 ns in the presently disclosed binder composition may be less than the lower limit of measurement in the measurement method described above.

The number of particles having a dielectric relaxation time of not less than 3 ns and not more than 80 ns and the number of particles having a dielectric relaxation time of not less than 16 ns and not more than 32 ns in the binder composition can be controlled through conditions of production steps such as a washing step and a particle removal step that are performed in a production method of the binder composition described further below or through the treatment method of water used in production of the binder composition, for example.

<Viable bacteria count>

The viable bacteria count in the presently disclosed binder composition is preferably $1 \times 10^3$ bacteria/mL or less, more preferably $1 \times 10^2$ bacteria/mL or less, and even more preferably $1 \times 10^1$ bacteria/mL or less. When the viable bacteria count in the binder composition is not more than any of the upper limits set forth above, the aggregation resistance of the binder composition can be further increased. Note that the lower limit for the viable bacteria count in the binder composition is not specifically limited and can be set as 0 bacteria/mL or more.

Also note that the viable bacteria count in the binder composition can be measured by a method described in the EXAMPLES section of the present specification.

<Other components>

The presently disclosed binder composition may optionally contain, as other components, pH modifiers and known additives such as conductive materials, wetting agents, and additives for electrolyte solution that can be added to a functional layer such as an electrode mixed material layer, a porous membrane layer, or an adhesive layer. Moreover, various production agents (emulsifiers, etc.) used in production of the polymer may be imported into the binder composition.

Furthermore, the presently disclosed binder composition preferably contains a preservative from a viewpoint of further inhibiting aggregate formation caused by bacterial growth. It is preferable that an isothiazoline compound is used as the preservative. Examples of isothiazoline compounds that can be used include those described in JP2016-31911A, for example. Of these isothiazoline compounds, benzisothiazoline compounds are preferable.

The concentration of the preservative in the binder composition is preferably 0.0005 mass% or more, and more preferably 0.001 mass% or more, and is preferably 0.2 mass% or less, and more preferably 0.1 mass% or less. When the concentration of the preservative in the binder composition is not less than any of the lower limits set forth above, the aggregation resistance of the binder composition can be further increased. On the other hand, when the concentration of the preservative in the binder composition is not more than any of the upper limits set forth above, deterioration of battery characteristics (cycle characteristics, etc.) caused by importation of the preservative into a secondary battery can be prevented.

<Vessel>

The presently disclosed binder composition is accommodated inside a vessel. The vessel accommodating the binder composition preferably has a structure that shields the binder composition from external air. By shielding the binder composition from external air, it is possible to prevent bacteria and foreign substances suspended in external air from becoming mixed into the binder composition and to prevent formation of aggregates.

Note that no specific limitations are placed on the shape of the vessel accommodating the binder composition. For example, a vessel having a shape such as a bag-type, can-type, bottle-type, or container-type shape can be used.

The vessel accommodating the binder composition preferably includes a ventilation port in an upper part (headspace) thereof and a drain tap for sampling in a lower part thereof. By using a vessel that includes a ventilation port in an upper part and a drain tap for sampling in a lower part, ventilation can easily be performed through the ventilation port when the binder composition is drained from the drain tap to perform sampling, and thus sampling of the binder composition can be efficiently performed.

In a situation in which the binder composition accommodated inside the vessel is to be stored, it is preferable that a cap is attached to the ventilation port in order to shield the binder composition from external air. Moreover, when sampling of the binder composition inside the vessel is to be performed, the sampling is preferably performed in a state in which the cap is removed from the ventilation port in order to enable ventilation.

A filling port for loading (collecting) the binder composition in the vessel may be provided separately to the ventilation port in the vessel accommodating the binder composition. Alternatively, the ventilation port of the vessel may also serve as a filling port (i.e., may be a filling and ventilation port).

The vessel preferably includes a foreign substance contamination prevention film at the ventilation port. By providing a foreign substance contamination prevention film at the ventilation port of the vessel, it is possible to improve the aggregation resistance after post-opening long-term storage of the binder composition accommodated inside the vessel because bacteria and foreign substances can be inhibited from entering through the ventilation port in accompaniment to air during sampling.

The foreign substance contamination prevention film typically has a reticulated (mesh) structure, porous structure, or the like. The opening size of the foreign substance contamination prevention film is preferably 0.5 $\mu$m or less, and more preferably 0.2 $\mu$m or less, and is preferably 0.05 $\mu$m or more. When the opening size of the foreign substance contamination prevention film is not more than any of the upper limits set forth above, the aggregation resistance after post-opening long-term storage of the binder composition accommodated inside the vessel can be further improved because mixing in of foreign substances and the like can be further inhibited. On the other hand, when the opening size of the foreign substance contamination prevention film is not less than the lower limit set forth above, sampling of the binder composition can be performed efficiently by sufficiently ensuring ventilating performance at the ventilation port.

The material of the foreign substance contamination prevention film can be a resin material such as polyethersulfone, polypropylene, polycarbonate, polytetrafluoroethylene, or polyvinylidene fluoride, for example.

Moreover, the foreign substance contamination prevention film has preferably undergone sterilization treatment by a known method.

The vessel accommodating the binder composition may be made of resin or may be made of metal, for example, without any specific limitations. From a viewpoint of inhibiting staining caused by elution of the material of the vessel, it is preferable that a resin such as polyethylene (PE) or polypropylene (PP) is used as the material of a section of the surface of the vessel that is in contact with the binder composition.

The vessel accommodating the binder composition may be a commercially available product, examples of which include 22AT-2, POLYCON 13SL, POLYCON 16SL, POLYCON 20SL3, POLYCON 20SL3PO, POLYCON 20SL4, POLYCON 20SL5, POLYCON 20SL5W, and POLYCON 20SL6 (each produced by Sekisui Seikei Co., Ltd.). Other examples of vessels that can be used include an IBC container produced by Schuetz GmbH & Co., a PE can or PE drum produced by Kodama, and a PE can produced by Aicello Corporation.

<Production method of binder composition>

No specific limitations are placed on the method by which the presently disclosed binder composition set forth above is produced so long as the binder composition contains a polymer and water, is accommodated inside a vessel, and the number of particles having a dielectric relaxation time of not less than 3 ns and not more than 80 ns is controlled to $1 \times 10^3$ particles/mL or less. However, it is preferable that the presently disclosed binder composition set forth above is produced through:

a step (washing step) of washing an inner surface of piping by which a mixture containing a polymer and water (i.e., a binder composition) is transferred using water of 70°C or higher;
a step (polymerization step) of polymerizing a monomer composition containing monomer(s) and water in a reactor to obtain a mixture containing a polymer and water; and
a step (collection step) of transferring the mixture of the polymer and water through the pipe after the above-described washing has been performed and loading the mixture into a vessel so as to collect the mixture therein.

By producing the binder composition through the washing step, polymerization step, and collection step described above, the number of particles having a dielectric relaxation time of not less than 3 ns and not more than 80 ns can be reduced, and thus a binder composition having even better aggregation resistance can be obtained.

<<Washing step>>

In the washing step, the inner surface of piping is washed using water of 70°C or higher. More specifically, washing of the inner surface of the piping can be performed by causing water of 70°C or higher to pass through the inside of the piping. From a viewpoint of reducing the number of particles having a dielectric relaxation time of not less than 3 ns and not more than 80 ns, the temperature of the water used in the washing is required to be 70°C or higher, and is preferably 80°C or higher.

Moreover, the washing step may be performed with respect to equipment other than the piping using water of 70°C or higher. For example, the reactor used for polymerization in the subsequently described polymerization step may be subjected to washing together with the piping in advance of the polymerization step.

<<Polymerization step>>

In the polymerization step, a monomer composition that contains water and monomer(s) previously described in the "Polymer" section, for example, is polymerized. Note that the proportional content of each monomer in the monomer composition can be set in accordance with the desired proportional content of each type of monomer unit (repeating unit) in the polymer.

The method of polymerization is not specifically limited and may be any of solution polymerization, suspension polymerization, bulk polymerization, and emulsion polymerization. Moreover, ionic polymerization, radical polymerization, living radical polymerization, various types of condensation polymerization, addition polymerization, or the like can be adopted as the polymerization reaction. A known emulsifier or polymerization initiator may be used as necessary during polymerization.

Although no specific limitations are placed on the polymerization temperature, from a viewpoint of causing the polymerization reaction to progress well while also further reducing the number of particles having a dielectric relaxation time within a specific range, the polymerization temperature is preferably 60°C or higher, and more preferably 70°C or higher, and is preferably 90°C or lower.

The water used in the polymerization step is preferably water that has undergone treatment such as ultraviolet treatment. By using water that has undergone treatment such as ultraviolet treatment in the polymerization step, the number of particles having a dielectric relaxation time within a specific range can be further reduced, and thus the aggregation resistance of the binder composition can be even further increased.

<<Collection step>>

The mixture of the polymer and water (aqueous solution or water dispersion of polymer) that is obtained in the polymerization step described above is transferred through the piping after washing has been performed in the washing step described above and is loaded into and collected inside a vessel. In this manner, a binder composition that is accommodated inside a vessel is obtained.

The vessel into which the mixture (i.e., the binder composition) is loaded can be a vessel such as previously described in the "Vessel" section.

Moreover, the number of particles having a dielectric relaxation time of not less than 3 ns and not more than 80 ns at an inner surface of the vessel prior to loading of the binder composition is preferably not less than 0 particles/cm$^2$ and not more than 10$^2$ particles/cm$^2$. When the number of particles having a dielectric relaxation time of not less than 3 ns and not more than 80 ns at the inner surface of the vessel prior to loading of the binder composition is within the specific range set forth above, the number of particles having a dielectric relaxation time within a specific range can be further reduced, and thus the aggregation resistance of the binder composition can be even further increased.

The number of particles at the inner surface of the vessel that have a dielectric relaxation time within the specific range set forth above can be measured by loading 50 mL of commercially available phosphate buffered saline into the vessel, shaking the vessel, and then using the collected saline to perform measurement by the same method as the measurement method for the number of particles in the previously described binder composition that have a dielectric relaxation time within the specific range set forth above.

In the collection step, the mixture described above (i.e., the binder composition) is preferably loaded into and collected in the vessel inside a cleanroom. By loading the binder composition into the vessel and collecting the binder composition in the vessel inside a cleanroom, the number of particles having a dielectric relaxation time within a specific range can be further reduced, and thus the aggregation resistance of the binder composition can be even further increased.

<<Other steps>>

The production method of the binder composition set forth above may include steps other than the washing step, the polymerization step, and the collection step (i.e., other steps).

[Optional component addition step]

The production method of the binder composition set forth above may, for example, include a step (optional component addition step) of adding additional water or other optionally used components such as previously described to the obtained mixture containing the polymer and water after the polymerization step.

Note that water used in the optional component addition step is preferably water that has undergone treatment such as ultraviolet treatment. By using water that has undergone treatment such as ultraviolet treatment as water used in the optional component addition step, the number of particles having a dielectric relaxation time within a specific range can be further reduced, and thus the aggregation resistance of the binder composition can be even further increased.

Furthermore, from a viewpoint of even further increasing the aggregation resistance of the binder composition, it is more preferable that the water used in the optional component addition step is water for which particles having a dielectric relaxation time of not less than 3 ns and not more than 80 ns have been captured at an electrode and removed by applying an alternating current electric field having a frequency of not less than 2 MHz and not more than 50 MHz in a flow channel in which electrodes are installed (particle removal treatment).

[Filtration step]

The production method of the binder composition set forth above preferably includes a step (filtration step) of filtering the mixture containing the polymer and water (aqueous solution or water dispersion of polymer) that is obtained in the previously described polymerization step. By filtering the mixture, the amount of polymer aggregates and foreign substances can be reduced, and thus the occurrence of coating unevenness when a slurry composition containing the binder composition is applied onto a substrate can be inhibited.

Note that in a case in which the production method of the binder composition includes the previously described optional component addition step, the filtration step is preferably performed with respect to a mixture that is obtained after the optional component addition step.

The method of filtration may be any filtration method without any specific limitations so long as it enables removal of polymer aggregates and/or foreign substances by a filter.

The pore diameter of the filter used in the filtration is preferably 12 $\mu$m or less, more preferably 8 $\mu$m or less, and even more preferably 6 $\mu$m or less. By using a filter having a pore diameter of 12 $\mu$m or less, the amount of polymer aggregates and foreign substances can be reduced, and thus the occurrence of coating unevenness when a slurry composition containing the binder composition is applied onto a substrate can be inhibited. Note that particularly in a case in which the polymer is a particulate polymer, the lower limit for the pore diameter of the filter is preferably 0.3 $\mu$m or more, and more preferably 0.4 $\mu$m or more from a viewpoint of preventing clogging of the filter by the polymer.

The "pore diameter" of a filter referred to in the present disclosure is an average value of the diameter of pores in the filter.

[Particle removal step]

The production method of the binder composition set forth above may include a step (particle removal step) of removing particles having a dielectric relaxation time of not less than 3 ns and not more than 80 ns from the mixture obtained in the polymerization step. By removing particles having a dielectric relaxation time of not less than 3 ns and not more than 80 ns, the aggregation resistance of the obtained binder composition can be even further increased.

Note that in a case in which the production method of the binder composition includes the previously described optional component addition step and/or filtration step, the particle removal step is preferably performed with respect to a mixture obtained after both the optional component addition step and the filtration step. By performing the particle removal step after both the optional component addition step and the filtration step, particles having a dielectric relaxation time within a specific range that have become mixed in during the optional component addition step and the filtration step can be efficiently removed, and thus the aggregation resistance of the obtained binder composition can be even further increased.

In the particle removal step, particles having a dielectric relaxation time of not less than 3 ns and not more than 80 ns can be captured at an electrode and removed by applying an alternating current electric field having a frequency of not less than 2 MHz and not more than 50 MHz with respect to the aforementioned mixture inside a flow channel in which electrodes are installed, for example. From a viewpoint of even further increasing the aggregation resistance of the obtained binder composition, it is preferable that particles having a dielectric relaxation time of not less than 16 ns and not more than 32 ns are captured at an electrode and removed in the particle removal step by applying an alternating current electric field having a frequency of not less than 5 MHz and not more than 10 MHz with respect to the mixture inside a flow channel in which electrodes are installed.

[Evaluation step]

The production method of the binder composition set forth above may include a step (evaluation step) of evaluating the binder composition.

No specific limitations are placed on the evaluation step so long as it is a step of evaluating components, properties, or the like of the binder composition. For example, a particle count measurement step in the presently disclosed method of evaluating a binder composition described below can be performed.

Moreover, the evaluation step may evaluate the binder composition prior to the previously described collection step (i.e., the binder composition prior to being loaded into the vessel) or may evaluate the binder composition after the collection step (i.e., the binder composition after being loaded into the vessel).

(Method of evaluating binder composition)

The presently disclosed method of evaluating a binder composition includes a step (particle count measurement step) of measuring the number of particles having a dielectric relaxation time of not less than 3 ns and not more than 80 ns in a binder composition. By measuring the number of particles having a dielectric relaxation time of not less than 3 ns and not more than 80 ns in a binder composition, it is possible to evaluate the aggregation resistance of the binder composition well. Moreover, the presently disclosed method of evaluating a binder composition enables prompt and simple evaluation of the aggregation resistance of a binder composition because it is not necessary to inoculate and culture a specimen of the binder composition in a medium such as when measuring a bacteria count, for example.

The presently disclosed method of evaluating a binder composition can be used to evaluate the aggregation resistance of the presently disclosed binder composition set forth above.

Moreover, the presently disclosed method of evaluating a binder composition may include steps other than the particle count measurement method described above.

<Particle count measurement step>

In the particle count measurement step, the number of particles having a dielectric relaxation time of not less than 3 ns and not more than 80 ns in a binder composition can be measured as the number of particles captured at an electrode when an alternating current electric field having any frequency within a range of not less than 2 MHz and not more than 50 MHz is applied to the binder composition inside a flow channel in which electrodes are installed.

Moreover, in the particle count measurement step, it is preferable to measure the number of particles captured at an electrode when an alternating current electric field having any frequency within a range of not less than 5 MHz and not more than 10 MHz is applied to the binder composition inside a flow channel in which electrodes are installed (i.e., the number of particles having a dielectric relaxation time of not less than 16 ns and not more than 32 ns in the binder composition).

The aggregation resistance of the binder composition can be judged to be excellent in a case in which the number of particles having a dielectric relaxation time of not less than 3 ns and not more than 80 ns that is measured in the particle count measurement step is $1 \times 10^3$ particles/mL or less. Moreover, the aggregation resistance of the binder composition can be judged to be even better in a case in which this particle count is $1 \times 10^2$ particles/mL or less.

Conversely, the aggregation resistance of the binder composition can be judged to be poor in a case in which the number of particles having a dielectric relaxation time of not less than 3 ns and not more than 80 ns that is measured in the particle count measurement step is more than $1 \times 10^3$ particles/mL.

Moreover, the aggregation resistance of the binder composition can be judged to be even better in a case in which the number of particles having a dielectric relaxation time of not less than 16 ns and not more than 32 ns that is measured in the particle count measurement step is $1 \times 10^3$ particles/mL or less. Furthermore, the aggregation resistance of the binder composition can be judged to be even better in a case in which this particle count is $1 \times 10^2$ particles/mL or less.

(Slurry composition for non-aqueous secondary battery functional layer)

The presently disclosed slurry composition is a composition that is for use in formation of a functional layer and that is produced using the binder composition set forth above. The presently disclosed slurry composition has excellent viscosity stability as a result of being produced using the presently disclosed binder composition in which the number of particles having a dielectric relaxation time of not less than 3 ns and not more than 80 ns is $1 \times 10^3$ particles/mL or less. Consequently, the presently disclosed slurry composition can be used to obtain a functional layer having excellent adhesiveness. Moreover, by using a battery member that includes this functional layer having excellent adhesiveness, it is possible to cause a secondary battery to display excellent battery characteristics.

<Binder composition>

The presently disclosed binder composition set forth above is used as a binder composition. No specific limitations are placed on the amount of the binder composition in the slurry composition. For example, in a case in which the slurry composition is a slurry composition for an electrode, the amount of the binder composition can be set as an amount such that, in terms of solid content per 100 parts by mass of electrode active material particles, the amount of a polymer originating from the binder composition is not less than 0.5 parts by mass and not more than 15 parts by mass. Moreover, in a case in which the slurry composition is a slurry composition for a porous membrane layer, for example, the amount of the binder composition can be set as an amount such that, in terms of solid content per 100 parts by mass of non-conductive particles, the amount of a polymer originating from the binder composition is not less than 0.5 parts by mass and not more than 30 parts by mass.

<Functional particles>

Electrode active material particles may be used as functional particles for causing a functional layer to display a desired function in a case in which the functional layer is an electrode mixed material layer, for example, and non-conductive particles may be used as such functional particles in a case in which the functional layer is a porous membrane layer, for example.

<<Electrode active material particles>>

Any particles formed of a known electrode active material that is used in secondary batteries can be used as electrode active material particles without any specific limitations. Specifically, examples of electrode active material particles that can be used in an electrode mixed material layer of a lithium ion secondary battery, which is one example of a secondary battery, include particles formed of any of the electrode active materials described below, but are not specifically limited thereto.

[Positive electrode active material]

A positive electrode active material that is compounded in a positive electrode mixed material layer of a positive electrode in a lithium ion secondary battery may, for example, be a compound that includes a transition metal such as a transition metal oxide, a transition metal sulfide, or a complex metal oxide of lithium and a transition metal. Examples of the transition metal include Ti, V, Cr, Mn, Fe, Co, Ni, Cu, and Mo.

Specific examples of positive electrode active materials that may be used include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$.

Note that one of the positive electrode active materials described above may be used individually, or two or more of the positive electrode active materials described above may be used in combination.

[Negative electrode active material]

A negative electrode active material that is compounded in a negative electrode mixed material layer of a negative electrode in a lithium ion secondary battery may, for example, be a carbon-based negative electrode active material, a metal-based negative electrode active material, or a negative electrode active material that is a combination thereof.

A carbon-based negative electrode active material can be defined as an active material that contains carbon as its main framework and into which lithium can be inserted (also referred to as "doping"). Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon; and graphitic materials such as natural graphite and artificial graphite.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); and an oxide, sulfide, nitride, silicide, carbide, or phosphide of any of the preceding examples. Moreover, an oxide such as lithium titanate can be used.

Note that one of the negative electrode active materials described above may be used individually, or two or more of the negative electrode active materials described above may be used in combination.

<<Non-conductive particles>>

Any known non-conductive particles that are used in secondary batteries can be used as non-conductive particles compounded in a porous membrane layer without any specific limitations.

Specifically, although both inorganic fine particles and organic fine particles can be used as non-conductive particles, inorganic fine particles are normally used. The material of the non-conductive particles is preferably an electrochemically stable material that is present stably in the environment of use of a secondary battery. Examples of materials of the non-conductive particles that are preferable from the viewpoints set forth above include particles of oxides such as aluminum oxide (alumina), hydrous aluminum oxide (boehmite), silicon oxide, magnesium oxide (magnesia), calcium oxide, titanium oxide (titania), $BaTiO_3$, ZrO, and alumina-silica complex oxide; particles of nitrides such as aluminum nitride and boron nitride; particles of covalently bonded crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, and/or the like as necessary.

One of these types of non-conductive particles may be used individually, or two or more of these types of non-conductive particles may be used in combination.

<Other components>

Components other than the binder composition and functional particles described above (i.e., other components) can be used in production of the slurry composition. Examples of other components that may be contained in the slurry composition include, but are not specifically limited to, the same other components as may be contained in the presently disclosed binder composition. One other component may be used individually, or two or more other components may be used in combination in a freely selected ratio.

<Production of slurry composition>

No specific limitations are placed on the method by which the slurry composition is produced.

For example, in a case in which the slurry composition is a slurry composition for an electrode, the slurry composition can be produced by mixing the binder composition, electrode active material particles, and other components that are used as necessary in the presence of a solvent containing water.

Moreover, in a case in which the slurry composition is a slurry composition for a porous membrane layer, the slurry composition can be produced by mixing the binder composition, non-conductive particles, and other components that are used as necessary in the presence of a solvent containing water.

Furthermore, in a case in which the slurry composition is a slurry composition for an adhesive layer, the binder composition can be used as the slurry composition in that form or after dilution with a solvent such as water, or the slurry composition can be produced by mixing the binder composition and other components that are used as necessary in the presence of a solvent containing water.

The method of mixing used in production of the slurry composition is not specifically limited, and the mixing may be performed using a typically used stirrer or disperser.

Moreover, water used in production of the slurry composition is preferably water that has undergone treatment such as ultraviolet treatment. By using water that has undergone treatment such as ultraviolet treatment as the water that is used in production of the slurry composition, the number of particles having a dielectric relaxation time within a specific range that become mixed into the binder composition can be reduced, and thus the aggregation resistance of the binder composition can be further increased.

(Functional layer for non-aqueous secondary battery)

The presently disclosed functional layer is a layer having a function such as giving and receiving electrons, reinforcement, or adhesion inside a non-aqueous secondary battery. For example, the functional layer may be an electrode mixed material layer that gives and receives electrons through an electrochemical reaction, a porous membrane layer that improves heat resistance and strength, or an adhesive layer that improves adhesiveness. Moreover, the presently disclosed functional layer is a layer that is formed from the presently disclosed slurry composition set forth above. For example, the presently disclosed functional layer can be formed by applying the slurry composition set forth above onto the surface of a suitable substrate to form a coating film, and subsequently drying the coating film that has been formed.

The presently disclosed functional layer has excellent adhesiveness as a result of being formed from the presently disclosed slurry composition that is produced using the presently disclosed binder composition. Consequently, a secondary battery that includes a battery member including the presently disclosed functional layer can display excellent battery characteristics.

<<Substrate>>

No limitations are placed on the substrate onto which the slurry composition is applied. For example, a coating film of the slurry composition may be formed on the surface of a releasable substrate, the coating film may be dried to form a functional layer, and then the releasable substrate may be peeled from the functional layer. The functional layer that is peeled from the releasable substrate in this manner can be used as a free-standing film in formation of a battery member for a secondary battery.

However, it is preferable that a current collector, a separator substrate, or an electrode substrate is used as the substrate from a viewpoint of raising battery member production efficiency since a step of peeling the functional layer can be omitted. Specifically, the slurry composition is preferably applied onto a current collector serving as a substrate when an electrode mixed material layer is to be produced. On the other hand, the slurry composition is preferably applied onto a separator substrate or an electrode substrate when a porous membrane layer or an adhesive layer is to be produced.

[Current collector]

The current collector is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

[Separator substrate]

The separator substrate is not specifically limited and may be a known separator substrate such as an organic separator substrate. The organic separator substrate is a porous member that is made from an organic material. The organic separator substrate may, for example, be a microporous membrane or non-woven fabric containing a polyolefin resin such as polyethylene or polypropylene, an aromatic polyamide resin, or the like, and is preferably a microporous membrane or non-woven fabric made from polyethylene due to the excellent strength thereof.

[Electrode substrate]

The electrode substrate (positive electrode substrate or negative electrode substrate) is not specifically limited and may be an electrode substrate having an electrode mixed material layer that contains electrode active material particles and a binder formed on a current collector such as described above.
The electrode active material particles and the binder that are contained in the electrode mixed material layer of the electrode substrate are not specifically limited and can be any of the electrode active material particles that were previously described in the "Slurry composition for non-aqueous secondary battery functional layer" section and any of the polymers that were previously described in the "Binder composition for non-aqueous secondary battery" section.

<<Formation method of functional layer>>

Examples of methods by which the functional layer may be formed on a substrate such as the current collector, separator substrate, or electrode substrate described above include:

(1) a method in which the presently disclosed slurry composition is applied onto the surface of the substrate (surface at the electrode mixed material layer-side in the case of the electrode substrate; same applies below) and is then dried;
(2) a method in which the substrate is immersed in the presently disclosed slurry composition and is then dried; and
(3) a method in which the presently disclosed slurry composition is applied onto a releasable substrate and is dried to produce a functional layer that is then transferred onto the surface of the substrate.

Of these methods, method (1) is particularly preferable since it allows simple control of the thickness of the functional layer. In more detail, method (1) includes a step (application step) of applying the slurry composition onto the substrate and a step (drying step) of drying the slurry composition that has been applied onto the substrate to form a functional layer.

[Application step]

Examples of methods by which the slurry composition can be applied onto the substrate in the application step include, but are not specifically limited to, doctor blading, reverse roll coating, direct roll coating, gravure coating, extrusion coating, and brush coating.

[Drying step]

The method by which the slurry composition on the substrate is dried in the drying step may be a commonly known method without any specific limitations. Examples of drying methods that may be used include drying by warm, hot, or low-humidity air, drying in a vacuum, and drying through irradiation with infrared light, electron beams, or the like.

(Battery member for non-aqueous secondary battery)

The presently disclosed battery member (separator, electrode, etc.) is a member that includes the presently disclosed functional layer set forth above. For example, the presently disclosed battery member may include the above-described functional layer and the above-described substrate (current collector, separator substrate, or electrode substrate). Note that the presently disclosed battery member may include constituent elements other than the presently disclosed functional layer set forth above and a substrate so long as the effects disclosed herein are not significantly lost. Examples of such constituent elements include, but are not specifically limited to, electrode mixed material layers, porous membrane layers, adhesive layers, and the like that do not correspond to the presently disclosed functional layer.

Moreover, the presently disclosed battery member may include a plurality of types of the presently disclosed functional layer. For example, an electrode may include an electrode mixed material layer formed from a presently disclosed slurry composition for an electrode on a current collector and may also include a porous membrane layer and/or adhesive layer formed from a presently disclosed slurry composition for a porous membrane layer and/or slurry composition for an adhesive layer on the electrode mixed material layer. Moreover, a separator, for example, may include a porous membrane layer formed from a presently disclosed slurry composition for a porous membrane layer on a separator substrate and may also include an adhesive layer formed from a presently disclosed slurry composition for an adhesive layer on the porous membrane layer.

The presently disclosed battery member can adhere well to an adjacent battery member and can cause a secondary battery to display excellent battery characteristics.

(Non-aqueous secondary battery)

The presently disclosed secondary battery includes the presently disclosed battery member set forth above. More specifically, the presently disclosed non-aqueous secondary battery includes a positive electrode, a negative electrode, a separator, and an electrolyte solution, and has the presently disclosed battery member as at least one of the positive electrode, the negative electrode, and the separator. The presently disclosed secondary battery can display excellent battery characteristics.

<Positive electrode, negative electrode, and separator>

At least one of the positive electrode, the negative electrode, and the separator used in the presently disclosed secondary battery is the presently disclosed battery member that includes the presently disclosed functional layer set forth above. Note that any known positive electrode, negative electrode, or separator can be used without any specific limitations as a positive electrode, negative electrode, or separator that does not include the presently disclosed functional layer.

<Electrolyte solution>

The electrolyte solution is normally an organic electrolyte solution obtained by dissolving a supporting electrolyte in an organic solvent. The supporting electrolyte may, for example, be a lithium salt in the case of a lithium ion secondary battery. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used in a lithium ion secondary battery, for example, include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Production method of non-aqueous secondary battery>

The presently disclosed secondary battery set forth above can be produced by, for example, stacking the positive electrode and the negative electrode with the separator in-between, performing rolling, folding, or the like of the resultant laminate as necessary to place the laminate in a battery container, injecting the electrolyte solution into the battery container, and sealing the battery container. At least one member among the positive electrode, the negative electrode, and the separator is the presently disclosed battery member. In order to prevent pressure increase inside the battery and occurrence of overcharging or overdischarging, an expanded metal; an overcurrent preventing device such as a fuse or a PTC device; or a lead plate may be provided in the battery container as necessary. The shape of the battery may, for example, be a coin type, a button type, a sheet type, a cylinder type, a prismatic type, or a flat type.

EXAMPLES

The following provides a more specific description of the present disclosure based on examples. However, the present disclosure is not limited to the following examples. In the following description, "%" and "parts" used in expressing quantities are by mass, unless otherwise specified.

In the examples and comparative examples, the following methods were used to measure and evaluate the THF-insoluble content of a polymer; the number of particles having a dielectric relaxation time within a specific range, the viable bacteria count, and the aggregate content in a binder composition; the viscosity stability of a slurry composition; and the adhesiveness of a porous membrane layer (functional layer).

<THF-insoluble content>

A binder composition straight after collection was used as a specimen and was dried in an environment of 23°C to 25°C and 50% humidity to prepare a film of 3 ± 0.3 mm in thickness. The prepared film was cut up as 5 mm squares so as to prepare a plurality of film pieces, and then approximately 1 g of these film pieces were precisely weighed. The weight of the precisely weighed film pieces was taken to be W0. Next, the precisely weighed film pieces were immersed in 100 g of tetrahydrofuran (THF) at 25°C for 24 hours. Thereafter, the film pieces were pulled out of the THF, the pulled out film pieces were vacuum dried at 105°C for 3 hours, and the weight thereof (weight of insoluble content) W1 was measured. The THF-insoluble content (%) in the polymer was calculated by the following formula.

$$\text{THF-insoluble content (\%)} = \text{W1/W0} \times 100$$

<Number of particles having dielectric relaxation time within specific range>

A binder composition straight after collection was used as a specimen, and the electrical conductivity of this specimen was adjusted to 20 $\mu$S/cm Next, a device capable of applying an alternating current electric field through electrodes installed inside a flow channel was used to apply an alternating current electric field having a frequency of 8 MHz with respect to the specimen, the number of particles having a dielectric relaxation time of 20 ns that were captured at an electrode was measured at an observation magnification of ×500 using a phase-contrast microscope (produced by Olympus Corporation; product name: CX43), and the number of such particles per 1 mL of the binder composition was calculated.

Note that a device described in Electrochemistry, 82(11), 1007-1011 (2014) was used as the "device capable of applying an alternating current electric field through electrodes installed inside a flow channel" that was used in the examples and comparative examples of the present specification.

<Viable bacteria count>

A binder composition straight after collection was used as a specimen. Diluted solutions of the specimen were prepared by 10-fold serial dilution using sterilized saline, and then 100 $\mu$L of the diluted solution of each of the concentrations was smeared into SCD agar medium (produced by Nihon Pharmaceutical Co., Ltd.; product name: DAIGO® (DAIGO is a registered trademark in Japan, other countries, or both)). After 2 days of aerobic culturing at 35°C, the number of colonies that had developed on the optimal concentration medium was measured, and the viable bacteria count in 1 mL of the binder composition was calculated.

<Aggregate content>

A binder composition straight after collection and a binder composition after 6 months of post-opening storage were used as specimens, 500 mL of each of the specimens was passed through a 200-mesh wire mesh (wire diameter 0.05 mm), and then 1 hour of drying was performed at 105°C. The content (%) of aggregates in the binder composition was calculated by the following calculation formula.

$$\text{Aggregate content (\%)} = (\text{Mass of wire mesh after drying} - \text{Mass of wire mesh before passing specimen})/(\text{Mass of binder composition} \times \text{Solid content concentration of binder (\%)}/100) \times 100$$

The calculated aggregate content was evaluated by the following standard. Note that a lower aggregate content indicates that the binder composition has better aggregation resistance.

A: Aggregate content of less than 0.05%
B: Aggregate content of not less than 0.05% and less than 0.1%
C: Aggregate content of not less than 0.1% and less than 0.5%
D: Aggregate content of 0.5% or more

<Viscosity stability>

The viscosity $\eta 0$ of each obtained slurry composition (slurry composition produced using binder composition straight after collection and slurry composition produced using binder composition after 6 months of post-opening storage) was measured using a B-type viscometer (produced by Toki Sangyo Co., Ltd.; product name: TVB-10; rotation speed: 60 rpm). Next, the slurry composition that had undergone viscosity measurement was stirred for 24 hours using a planetary mixer (rotation speed: 60 rpm), and the viscosity $\eta 1$ of the slurry composition after stirring was measured using the same type of B-type viscometer (rotation speed: 60 rpm). The viscosity maintenance rate $\Delta \eta$ of the slurry composition between before and after stirring ($\Delta \eta = \eta 1/\eta 0 \times 100(\%)$) was calculated, and the viscosity stability of the slurry composition was evaluated by the following standard. Note that the temperature during viscosity measurement was 25°C. A value of closer to 100% for the viscosity maintenance rate $\Delta \eta$ indicates that the slurry composition has better viscosity stability.

A: Viscosity maintenance rate $\Delta \eta$ of not less than 90% and not more than 110%

B: Viscosity maintenance rate $\Delta \eta$ of not less than 80% and less than 90%

C: Viscosity maintenance rate $\Delta \eta$ of not less than 70% and less than 80%

D: Viscosity maintenance rate $\Delta \eta$ of less than 70%

<Adhesiveness>

A produced separator including a porous membrane layer was cut out as a rectangle of 100 mm in length and 10 mm in width to obtain a test specimen. The test specimen was placed with the surface at which the porous membrane layer was located facing downward, and the porous membrane layer surface of the test specimen was affixed to a test stage (base plate made of SUS) via cellophane tape (tape prescribed by JIS Z1522). Thereafter, one end of the separator substrate was pulled in a perpendicular direction at a pulling speed of 50 mm/min to peel off the separator substrate, and the stress (N/m) during this peeling was measured (note that the cellophane tape was fixed to the test stage). Three measurements were made in the same manner. An average value of these measurements was determined, was taken to be the peel strength, and was evaluated by the following standard. A larger value for the peel strength indicates that there is stronger close adherence between the porous membrane layer and the separator substrate and that the porous membrane layer has better adhesiveness.

A: Peel strength of 3.0 N/m or more
B: Peel strength of not less than 2.5 N/m and less than 3.0 N/m
C: Peel strength of not less than 1.5 N/m and less than 2.5 N/m
D: Peel strength of less than 1.5 N/m

(Example 1)

<Production of binder composition>

<<Washing step>>

Prior to the steps described below, equipment such as a reactor used in a polymerization step and piping through which a binder composition passes was washed using 80°C water.

<<Polymerization step (acrylic polymer (1))>>

A reactor including a stirrer was supplied with 70 parts of water that had undergone ultraviolet irradiation treatment (hereinafter, also referred to simply as "ultraviolet irradiation treated water"), 0.15 parts of sodium lauryl sulfate (EMAL® 2F (EMAL is a registered trademark in Japan, other countries, or both) produced by Kao Corporation) as an emulsifier, and 0.5 parts of ammonium persulfate, the gas phase thereof was purged with nitrogen gas, and heating was performed to 60°C.
Meanwhile, a monomer composition was obtained in a separate vessel by mixing 50 parts of ultraviolet irradiation treated water, 0.5 parts of sodium dodecylbenzenesulfonate as a dispersant, 94 parts of n-butyl acrylate as a (meth)acrylic acid ester monomer, 2 parts of methacrylic acid as a hydrophilic group-containing monomer, 2 parts of acrylonitrile as a nitrile group-containing monomer, 1 part of allyl methacrylate as a cross-linkable monomer, and 1 part of allyl glycidyl ether as a glycidyl group-containing monomer. The monomer composition was continuously added into the reactor over 4 hours to carry out polymerization. The reaction was carried out at 60°C during the addition. Once this addition was complete, further stirring was performed at 70°C for 3 hours to complete the reaction and yield a water dispersion of an acrylic polymer (1) that was a particulate polymer (i.e., a mixture containing the acrylic polymer (1) and water).

<<Optional component addition step>>

Water and a pH modifier were added to the water dispersion of the acrylic polymer (1) in order to adjust the water dispersion to a desired solid content concentration and pH, and then an isothiazoline compound (1,2-benzisothiazolin-3-one) was added as a preservative such as to have a final concentration of 0.056 mass% and thereby obtain a mixture.
Note that water added in the optional component addition step was water from which particles having a dielectric relaxation time of 20 ns had been captured at an electrode and removed (hereinafter, also referred to as "particle removal treatment") by applying an alternating current electric field having a frequency of 8 MHz using a device capable of applying an alternating current electric field through electrodes installed inside a flow channel.

<<Filtration step>>

The mixture obtained in the optional component addition step described above was filtered by passing the mixture through a filter (produced by Pall Corporation; product name: NXT0.5; pore diameter: 5 μm).

<<Particle removal step>>

A device capable of applying an alternating current electric field through electrodes installed inside a flow channel was used with respect to the mixture after filtration in order to capture and remove particles having a dielectric relaxation time of 20 ns at an electrode by applying an alternating current electric field having a frequency of 8 MHz.

<<Collection step>>

The mixture after the particle removal step was loaded into and collected in a vessel inside a cleanroom so as to obtain a binder composition that was accommodated inside the vessel. Note that a tank made from polyethylene (plastic tank; produced by Sekisui Chemical Co., Ltd.) was used as the vessel. Also note that a ventilation port also serving as a filling port (filling and ventilation port) was provided in an upper part (headspace) of the plastic tank, and a drain tap for sampling was provided in a lower part of the plastic tank. The mixture obtained after the particle removal step was collected inside the vessel via the filling and ventilation port. After collection in the vessel was complete, a cap was attached to the filling and ventilation port.
The vessel accommodating the binder composition was subsequently moved out of the cleanroom. The cap was removed and, with the filling and ventilation port in an open state, 50% of the total amount of the binder composition was drained from the drain tap in the lower part of the vessel so as to perform sampling and thereby obtain a binder composition straight after collection. The obtained binder composition straight after collection was used to measure the THF-insoluble content of the polymer and also the number of particles having a dielectric relaxation time within a specific range, the viable bacteria count, and the aggregate content in the binder composition. The results are shown in Table 1.

After reattaching the cap to the filling and ventilation port, the binder composition remaining in the vessel was stored at a temperature of not lower than 20°C and not higher than 40°C for 6 months. Thereafter, the binder composition was sampled by the same operation as described above so as to obtain a binder composition after 6 months of post-opening storage. The binder composition after 6 months of post-opening storage was used to measure the aggregate content. The result is shown in Table 1.

<Production of slurry composition for porous membrane layer>

Alumina particles (produced by Sumitomo Chemical Co., Ltd.; product name: AKP-3000; volume-average particle diameter D50: 0.45 $\mu$m; tetrapod-shaped particles) were prepared as non-conductive particles.

In addition, carboxymethyl cellulose (produced by Daicel FineChem Ltd.; product name: D1200; degree of etherification: 0.8 to 1.0; viscosity of 1% aqueous solution: 10 mPa·s to 20 mPa·s) was prepared as a viscosity modifier.

Ultraviolet irradiation treated water, 100 parts of the non-conductive particles, and 1.5 parts of the viscosity modifier were mixed and dispersed such as to have a solid content concentration of 40%. In addition, 4 parts (in terms of solid content) of the binder composition straight after collection that was obtained as described above and 0.2 parts of a polyethylene glycol surfactant (SAN NOPCO SN-WET 366) were added to the obtained dispersion liquid and were mixed therewith to yield a slurry composition for a porous membrane layer. The viscosity stability of the slurry composition for a porous membrane layer was evaluated. The result is shown in Table 1.

In addition, a slurry composition for a porous membrane was produced by the same operations as described above with the exception that the binder composition after 6 months of post-opening storage was used instead of the binder composition straight after collection, and the viscosity stability of this slurry composition for a porous membrane was evaluated. The result is shown in Table 1.

<Production of porous membrane layer-equipped separator>

The slurry composition for a porous membrane layer produced using the binder composition straight after collection that was obtained as described above was applied onto a separator substrate (made of polypropylene; product name: Celgard 2500) such that the coating weight of the slurry composition for a porous membrane layer was 0.3 mg/cm$^2$ and was dried at 50°C for 3 minutes. This operation was performed with respect to one side of the separator substrate so as to obtain a porous membrane layer-equipped separator having a porous membrane layer formed at one side of a separator substrate. The obtained porous membrane layer-equipped separator was used to evaluate the adhesiveness of the porous membrane layer (functional layer). The result is shown in Table 1.

(Example 2)

A binder composition, a slurry composition for a porous membrane layer, and a porous membrane layer-equipped separator were produced, and various measurements and evaluations were performed in the same way as in Example 1 with the exception that in production of the binder composition in Example 1, an isothiazoline compound (1,2-benzisothiazolin-3-one) was not added as a preservative in the optional component addition step. The results are shown in Table 1.

(Example 3)

A binder composition, a slurry composition for a porous membrane layer, and a porous membrane layer-equipped separator were produced, and various measurements and evaluations were performed in the same way as in Example 2 with the exception that in production of the binder composition in Example 2, the polymerization step was performed as follows. The results are shown in Table 1. Note that "SBR" in Table 1 indicates "styrene-butadiene".

<<Polymerization step (styrene-butadiene polymer (1))>>

A reactor was charged with 150 parts of ultraviolet irradiation treated water, 25 parts of sodium dodecylbenzenesulfonate aqueous solution (concentration: 10%) as an emulsifier, 63 parts of styrene as an aromatic vinyl monomer, 3.5 parts of itaconic acid and 1 part of 2-hydroxyethyl acrylate as hydrophilic group-containing monomers, and 0.5 parts of t-dodecyl mercaptan as a molecular weight modifier in this order. Next, gas inside the reactor was purged three times with nitrogen, and then 32.5 parts of 1,3-butadiene was added as an aliphatic conjugated diene monomer. The reactor was held at 60°C while 0.5 parts of potassium persulfate was added as a polymerization initiator to initiate a polymerization reaction that was then continued under stirring. At the point at which the polymerization conversion rate reached 96%, cooling was performed and 0.1 parts of hydroquinone aqueous solution (concentration: 10%) was added as a polymerization inhibitor so as to quench the polymerization reaction and yield a water dispersion of a styrene-butadiene polymer (1) that was a particulate polymer (i.e., a mixture containing the styrene-butadiene polymer (1) and water).

(Example 4)

A binder composition, a slurry composition for a porous membrane layer, and a porous membrane layer-equipped separator were produced, and various measurements and evaluations were performed in the same way as in Example 2 with the exception that in production of the binder composition in Example 2, the washing step was not performed, and water used in the polymerization step was changed from ultraviolet irradiation treated water to water (deionized water) that had not undergone ultraviolet irradiation treatment. The results are shown in Table 1.

(Example 5)

A binder composition, a slurry composition for a porous membrane layer, and a porous membrane layer-equipped separator were produced, and various measurements and evaluations were performed in the same way as in Example 1 with the exception that in production of the binder composition in Example 1, water used in the polymerization step was changed from ultraviolet irradiation treated water to water (deionized water) that had not undergone ultraviolet irradiation treatment, and water added in the optional component addition step was changed from water that had undergone particle removal treatment to water (deionized water) that had not undergone particle removal treatment. The results are shown in Table 1.

(Example 6)

A binder composition, a slurry composition for a porous membrane layer, and a porous membrane layer-equipped separator were produced, and various measurements and evaluations were performed in the same way as in Example 1 with the exception that in production of the binder composition in Example 1, a foreign substance contamination prevention film (material: polytetrafluoroethylene (PTFE); opening size: 0.2 $\mu$m; sterilization treated) was installed such as to completely cover the filling and ventilation port prior to attaching the cap to the filling and ventilation port once collection in the vessel was complete. The results are shown in Table 1.

(Example 7)

A binder composition, a slurry composition for a porous membrane layer, and a porous membrane layer-equipped separator were produced, and various measurements and evaluations were performed in the same way as in Example 1 with the exception that in production of the binder composition in Example 1, the polymerization step was performed as follows. The results are shown in Table 1.

<<Polymerization step (acrylic polymer (2))>>

An autoclave equipped with a stirrer was charged with 300 parts of ultraviolet irradiation treated water, 93.5 parts of n-butyl acrylate as a (meth)acrylic acid ester monomer, 2 parts of acrylonitrile as a nitrile group-containing monomer, 1 part of allyl glycidyl ether as a glycidyl group-containing monomer, 2 parts of methacrylic acid as a hydrophilic group-containing monomer, 1.5 parts of N-methylolacrylamide as a N-alkylol group-containing monomer, 0.05 parts of t-dodecyl mercaptan as a molecular weight modifier, and 0.3 parts of potassium persulfate as a polymerization initiator. These materials were sufficiently stirred and were then polymerized under heating at 70°C to yield a water dispersion of an acrylic polymer (2) that was a particulate polymer (i.e., a mixture containing the acrylic polymer (2) and water).

(Example 8)

A binder composition, a slurry composition for a porous membrane layer, and a porous membrane layer-equipped separator were produced, and various measurements and evaluations were performed in the same way as in Example 7 with the exception that in production of the binder composition in Example 7, water used in the polymerization step was changed from ultraviolet irradiation treated water to water (deionized water) that had not undergone ultraviolet irradiation treatment, the particle removal step was not performed, an IBC container (produced by Schuetz GmbH & Co.) was used instead of a plastic tank as the vessel in which the binder composition was collected, and a foreign substance contamination prevention film (material: polytetrafluoroethylene (PTFE); opening size: 0.2 μm; sterilization treated) was installed such as to completely cover a filling and ventilation port prior to attaching a cap once collection in the vessel was complete. The results are shown in Table 1. Note that the IBC container used in the above description included a filling and ventilation port in an upper part (headspace) thereof and a drain tap for sampling in a lower part thereof.

(Example 9)

A binder composition, a slurry composition for a porous membrane layer, and a porous membrane layer-equipped separator were produced, and various measurements and evaluations were performed in the same way as in Example 8 with the exception that in production of the binder composition in Example 8, the same plastic tank as used in Example 6 was used instead of an IBC container as a vessel in which the binder composition was collected. The results are shown in Table 1.

(Example 10)

A binder composition, a slurry composition for a porous membrane layer, and a porous membrane layer-equipped separator were produced, and various measurements and evaluations were performed in the same way as in Example 8 with the exception that in production of the binder composition in Example 8, the polymerization step was performed as follows. The results are shown in Table 1.

<<Polymerization step (acrylic polymer (3))>>

A 5 MPa pressure-resistant vessel equipped with a stirrer was charged with 100 parts of a monomer composition, 0.4 parts of sodium dodecylbenzenesulfonate as an emulsifier, 150 parts of deionized water, and 0.3 parts of potassium persulfate as a polymerization initiator, was sufficiently stirred, and was then heated to 50°C to initiate polymerization. The monomer composition was a composition containing 92.9 parts of n-butyl acrylate as a (meth)acrylic acid ester monomer, 2 parts of acrylonitrile as a nitrile group-containing monomer, 2 parts of methacrylic acid as a hydrophilic group-containing monomer, 1.5 parts of N-methylolacrylamide as an N-alkylol group-containing monomer, and 1.6 parts of acrylamide as a (meth)acrylamide monomer. At the point at which the polymerization conversion rate reached 96%, cooling was performed to quench the reaction and yield a water dispersion of an acrylic polymer (3) that was a particulate polymer (i.e., a mixture containing the acrylic polymer (3) and water).

(Example 11)

A binder composition, a slurry composition for a porous membrane layer, and a porous membrane layer-equipped separator were produced, and various measurements and evaluations were performed in the same way as in Example 8 with the exception that in production of the binder composition in Example 8, the polymerization step was performed as follows. The results are shown in Table 1.

<<Polymerization step (acrylic polymer (4))>>

A reactor including a stirrer was supplied with 70 parts of deionized water, 0.15 parts of polyoxyethylene lauryl ether (EMULGEN® 120 (EMULGEN is a registered trademark in Japan, other countries, or both) produced by Kao Corporation) as an emulsifier, and 0.5 parts of ammonium persulfate, the gas phase thereof was purged with nitrogen gas, and heating was performed to 60°C.
Meanwhile, a monomer composition was obtained in a separate vessel by mixing 50 parts of deionized water, 0.5 parts of polyoxyethylene lauryl ether (EMULGEN® 120 produced by Kao Corporation) as an emulsifier, 64.8 parts of 2-ethylhexyl acrylate (2-EHA) as a (meth)acrylic acid ester monomer, 30 parts of styrene (ST) as an aromatic vinyl monomer, 2 parts of allyl glycidyl ether (AGE) as a glycidyl group-containing monomer, 0.2 parts of allyl methacrylate (AMA) as a polyvalent ethylenically unsaturated cross-linkable monomer, and 3 parts of acrylic acid as a hydrophilic group-containing monomer. The monomer composition was continuously added into the reactor over 4 hours to carry out polymerization. The reaction was carried out at 70°C during the addition. Once this addition was complete, further stirring was performed at 80°C for 3 hours to complete the reaction and yield a water dispersion of an acrylic polymer (4) that was a particulate polymer (i.e., a mixture containing the acrylic polymer (4) and water).

(Example 12)

A binder composition, a slurry composition for a porous membrane layer, and a porous membrane layer-equipped separator were produced, and various measurements and evaluations were performed in the same way as in Example 8 with the exception that a water dispersion obtained by mixing the water dispersion of the acrylic polymer (2) obtained in the polymerization step of Example 8 and a water dispersion of a styrene-butadiene polymer (2) obtained through the following polymerization step such that, in terms of solid content, acrylic polymer (2):styrene-butadiene polymer (2) = 10:90 (mass ratio) was used in the optional component addition step and that a particle removal step was performed. The results are shown in Table 1.

<<Polymerization step (styrene-butadiene polymer (2))>>

A 5 MPa pressure-resistant vessel equipped with a stirrer was charged with 60 parts of styrene, 35 parts of 1,3-butadiene, 4 parts of itaconic acid as an ethylenically unsaturated carboxylic acid monomer, 1 part of 2-hydroxyethyl acrylate as a hydroxy group-containing monomer, 0.3 parts of t-dodecyl mercaptan as a molecular weight modifier, 5 parts of sodium dodecylbenzenesulfonate as an emulsifier, 150 parts of deionized water, and 1 part of potassium persulfate as a polymerization initiator, was sufficiently stirred, and was then heated to 55°C to initiate polymerization. At the point at which monomer consumption reached 95%, cooling was performed to quench the reaction and yield a water dispersion of a styrene-butadiene polymer (2) that was a particulate polymer (i.e., a mixture containing the styrene-butadiene polymer (2) and water).

(Example 13)

A binder composition, a slurry composition for a porous membrane layer, and a porous membrane layer-equipped separator were produced, and various measurements and evaluations were performed in the same way as in Example 8 with the exception that a water dispersion obtained by mixing the water dispersion of the acrylic polymer (2) obtained in the polymerization step of Example 8, the water dispersion of the styrene-butadiene polymer (2) obtained in the polymerization step of Example 12, and a water dispersion of a styrene-butadiene polymer (3) obtained through the following polymerization step such that, in terms of solid content, acrylic polymer (2):styrene-butadiene polymer (2):styrene-butadiene polymer (3) = 10:45:45 (mass ratio) was used in the optional component addition step and that a particle removal step was performed. The results are shown in Table 1.

<<Polymerization step (styrene-butadiene polymer (3))>>

A 5 MPa pressure-resistant vessel equipped with a stirrer was charged with 16 parts of acrylonitrile as a nitrile group-containing monomer, 47 parts of 1,3-butadiene, 0.3 parts of t-dodecyl mercaptan as a molecular weight modifier, 5 parts of sodium dodecylbenzenesulfonate as an emulsifier, 150 parts of deionized water, and 1 part of potassium persulfate as a polymerization initiator, was sufficiently stirred, and was then heated to 55°C to initiate polymerization of a first polymerization component. At the point at which monomer consumption reached 80.0%, a water dispersion obtained through pre-mixing of 14 parts of styrene, 10 parts of 1,3-butadiene, 10 parts of acrylonitrile as a nitrile group-containing monomer, 1 part of acrylic acid and 2 parts of itaconic acid as hydrophilic group-containing monomers, 0.2 parts of t-dodecyl mercaptan as a molecular weight modifier, 5 parts of sodium dodecylbenzenesulfonate as an emulsifier, 150 parts of deionized water, and 1 part of potassium persulfate as a polymerization initiator was further added, and polymerization of a second polymerization component was performed. At the point at which consumption of all charged monomer reached 95%, cooling was performed to quench the reaction and yield a water dispersion of a styrene-butadiene polymer (3) that was a particulate polymer (i.e., a mixture containing the styrene-butadiene polymer (3) and water).

(Comparative Example 1)

A binder composition, a slurry composition for a porous membrane layer, and a porous membrane layer-equipped separator were produced, and various measurements and evaluations were performed in the same way as in Example 1 with the exception that in production of the binder composition in Example 1, the washing step was not performed, water used in the polymerization step was changed from ultraviolet irradiation treated water to water (deionized water) that had not undergone ultraviolet irradiation treatment, water added in the optional component addition step was changed from water that had undergone particle removal treatment to water (deionized water) that had not undergone particle removal treatment, and the particle removal step was not performed, and also that water used in production of the slurry composition in Example 1 was changed from ultraviolet irradiation treated water to water (deionized water) that had not undergone ultraviolet irradiation treatment. The results are shown in Table 1.

25

(Comparative Example 2)

A binder composition, a slurry composition for a porous membrane layer, and a porous membrane layer-equipped separator were produced, and various measurements and evaluations were performed in the same way as in Example 1 with the exception that in production of the binder composition in Example 1, the washing step and the particle removal step were not performed. The results are shown in Table 1.

Table 1

| | | | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 |
|---|---|---|---|---|---|---|---|---|---|---|---|---|---|---|---|---|---|
| Binder composition | Polymer | Type | Acrylic (1) | Acrylic (1) | SBR (1) | Acrylic (1) | Acrylic (1) | Acrylic (1) | Acrylic (2) | Acrylic (2) | Acrylic (2) | Acrylic (3) | Acrylic (4) | Acrylic (2)/ SBR(2) = 10/90 | Acrylic (2)/ SBR (2) / SBR (3) = 10/45/45 | Acrylic (1) | Acrylic (1) |
| | | THF-insoluble content [mass%] | 85 | 85 | 90 | 85 | 85 | 85 | 90 | 90 | 90 | 90 | 90 | 90 | 90 | 85 | 85 |
| | Number of particles having dielectric relaxation time of 20 ns [particles/mL] | | 0 | 1 | 1 | $1 \times 10^1$, | $1 \times 10^2$, | 0 | 0 | $1 \times 10^2$ | $1 \times 10^2$ | $1 \times 10^2$ | $9 \times 10^1$ | $3 \times 10^1$ | $5 \times 10^1$ | $5 \times 10^4$ | $1 \times 10^4$ |
| | Viable bacteria court [bacteria/mL] | | 0 | 1 | 0 | $1 \times 10^1$ | $1 \times 10^1$ | 0 | 0 | $8 \times 10^1$ | $8 \times 10^1$ | $8 \times 10^1$ | $8 \times 10^1$ | $2 \times 10^1$ | $5 \times 10^1$ | $6 \times 10^1$ | $1 \times 10^1$ |
| | Washing step | | Yes | Yes | Yes | No | Yes | Yes | Yes | Yes | Yes | Yes | Yes | Yes | Yes | No | No |
| | Polymerization step | Ultraviolet irradiation treatment of used water | Yes | Yes | Yes | No | No | Yes | Yes | No | No | No | No | No | No | No | Yes |
| | | Used amount of allyl glycidyl ether [parts by mass] | 1 | 1 | 0 | 1 | 1 | 1 | 1 | 1 | 1 | 0 | 2 | 1/0 | 1/0/0 | 1 | 1 |
| | | Used amount of N-melhylolacrylamide [parts by mass] | 0 | 0 | 0 | 0 | 0 | 0 | 1.5 | 1.5 | 1.5 | 1.5 | 0 | 1.5/0 | 1.5/0/0 | 0 | 0 |

EP 4 040 544 A1

(continued)

| Category | Property | Example 1 | Example 2 | Example 3 | Example 4 | Example 5 | Example 6 | Example 7 | Example 8 | Example 9 | Example 10 | Example 11 | Example 12 | Example 13 | Comparative Example 1 | Comparative Example 2 |
|---|---|---|---|---|---|---|---|---|---|---|---|---|---|---|---|---|
| Optional component addition step | Particle removal treatment of used water | Yes | Yes | Yes | Yes | No | Yes | Yes | Yes | Yes | Yes | Yes | Yes | Yes | No | Yes |
| | Addition of preservative | Yes | No | No | No | Yes | Yes | Yes | Yes | Yes | Yes | Yes | Yes | Yes | Yes | Yes |
| | Particle removal step | Yes | Yes | Yes | Yes | Yes | Yes | Yes | No | No | No | No | Yes | Yes | No | No |
| Vessel | Foreign substance contamination prevention film | No | No | No | No | No | Yes | No | Yes | Yes | Yes | Yes | Yes | Yes | No | No |
| | Form of vessel | Plastic tank | Plastic tank | Plastic tank | Plastic tank | Plastic tank | Plastic tank | Plastic tank | IBC container | Plastic tank | IBC container | IBC container | IBC container | IBC container | Plastic tank | Plastic tank |
| Slurry composition | Sterilization treatment of used water | Yes | Yes | Yes | Yes | Yes | Yes | Yes | Yes | Yes | Yes | Yes | Yes | Yes | No | Yes |
| Using binder composition straight collection | Aggregate content in binder composition | A | A | A | A | A | A | A | A | A | A | A | A | A | D | B |
| | Viscosity stability of slurry composition | A | A | A | B | B | A | A | A | A | A | A | A | A | D | D |
| Evaluation | Adhesiveness of porous membrane layer | A | A | A | A | after A | A | A | A | A | A | A | A | A | D | D |

28

|  |  | Example 1 | Example 2 | Example 3 | Example 4 | Example 5 | Example 6 | Example 7 | Example 8 | Example 9 | Example 10 | Example 11 | Example 12 | Example 13 | Camparative Example 1 | Camparative Example 2 |
|---|---|---|---|---|---|---|---|---|---|---|---|---|---|---|---|---|
| Using binder composition after 6 months of post-opening storage | Aggregate content in binder composition | B | B | C | B | C | A | A | A | A | B | C | B | B | D | D |
|  | Viscosity stability of composition | B | B | C | C | C | A | A | A | A | B | C | B | B | D | D |

It can be seen from Table 1 that aggregation resistance is excellent in the case of the binder compositions of Examples 1 to 13 that each contain a polymer and water, that are each accommodated inside a vessel, and in each of which the number of particles having a dielectric relaxation time within a specific range is $1 \times 10^3$ particles/mL or less.

In contrast, in can be seen that aggregation resistance is poor in the case of the binder compositions of Comparative Examples 1 and 2, in each of which the number of particles having a dielectric relaxation time within a specific range exceeds $1 \times 10^3$ particles/mL.

Moreover, although the binder compositions of Examples 1 to 5 and the binder compositions of Comparative Examples 1 and 2 each have a viable bacteria count of less than $1 \times 10^3$, the binder compositions of Examples 1 to 5, in each of which the number of particles having a dielectric relaxation time within a specific range is $1 \times 10^3$ particles/mL or less, have better aggregation resistance than the binder compositions of Comparative Examples 1 and 2, in each of which the number of such particles exceeds $1 \times 10^3$ particles/mL. This demonstrates that suppressing the number of particles having a dielectric relaxation time within a specific range to $1 \times 10^3$ particles/mL or less can improve the aggregation resistance of a binder composition to a greater extent than suppressing the viable bacteria count to less than $1 \times 10^3$ bacteria/mL, for example.

INDUSTRIAL APPLICABILITY

According to the present disclosure, it is possible to provide a binder composition for a non-aqueous secondary battery that has excellent aggregation resistance.

Moreover, according to the present disclosure, it is possible to provide a slurry composition for a non-aqueous secondary battery functional layer that is produced using this binder composition for a non-aqueous secondary battery.

Furthermore, according to the present disclosure, it is possible to provide a functional layer for a non-aqueous secondary battery that is formed using this slurry composition for a non-aqueous secondary battery functional layer.

Also, according to the present disclosure, it is possible to provide a battery member for a non-aqueous secondary battery that includes this functional layer for a non-aqueous secondary battery and a non-aqueous secondary battery that includes this battery member for a non-aqueous secondary battery.

Moreover, according to the present disclosure, it is possible to provide a method of evaluating a binder composition for a non-aqueous secondary battery that can evaluate the aggregation resistance of a binder composition for a non-aqueous secondary battery well.

**Claims**

1. A binder composition for a non-aqueous secondary battery comprising a polymer and water and accommodated inside a vessel, wherein
   the number of particles having a dielectric relaxation time of not less than 3 ns and not more than 80 ns is $1 \times 10^3$ particles/mL or less.

2. The binder composition for a non-aqueous secondary battery according to claim 1, wherein the number of the particles is $1 \times 10^2$ particles/mL or less.

3. The binder composition for a non-aqueous secondary battery according to claim 1 or 2, further comprising a preservative.

4. The binder composition for a non-aqueous secondary battery according to any one of claims 1 to 3, wherein the vessel includes a foreign substance contamination prevention film having an opening size of 0.5 $\mu$m or less at a ventilation port.

5. The binder composition for a non-aqueous secondary battery according to any one of claims 1 to 4, wherein the polymer includes either or both of an N-alkylol group-containing monomer unit and a glycidyl group-containing monomer unit.

6. A slurry composition for a non-aqueous secondary battery functional layer produced using the binder composition for a non-aqueous secondary battery according to any one of claims 1 to 5.

7. The slurry composition for a non-aqueous secondary battery functional layer according to claim 6, further comprising functional particles.

8. A functional layer for a non-aqueous secondary battery formed using the slurry composition for a non-aqueous secondary battery functional layer according to claim 6 or 7.

9. A battery member for a non-aqueous secondary battery comprising the functional layer for a non-aqueous secondary battery according to claim 8.

10. A non-aqueous secondary battery comprising the battery member for a non-aqueous secondary battery according to claim 9.

11. A method of evaluating a binder composition for a non-aqueous secondary battery comprising a step of measuring the number of particles having a dielectric relaxation time of not less than 3 ns and not more than 80 ns in a binder composition for a non-aqueous secondary battery.

## INTERNATIONAL SEARCH REPORT

| International application No. |
|---|
| PCT/JP2020/029580 |

A. CLASSIFICATION OF SUBJECT MATTER
Int.Cl. H01M4/62(2006.01)i, H01M50/409(2021.01)i
FI: H01M2/16L, H01M4/62Z, H01M2/16P

According to International Patent Classification (IPC) or to both national classification and IPC

B. FIELDS SEARCHED

Minimum documentation searched (classification system followed by classification symbols)
Int.Cl. H01M4/62, H01M2/16

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2015-118908 A (JSR CORPORATION) 25 June 2015 (2015-06-25), claims, paragraph [0088], examples | 1-3, 5-10<br>4<br>11 |
| Y | JP 2006-206190 A (CANON INC.) 10 August 2006 (2006-08-10), claims, paragraphs [0002], [0019] | 4 |
| A | JP 11-201927 A (SHARP CORPORATION) 30 July 1999 (1999-07-30), claims, paragraphs [0059]-[0067] | 1-11 |
| P, A | WO 2020/066954 A1 (ZEON CORPORATION) 02 April 2020 (2020-04-02), examples, claims | 1-11 |
| A | WO 2013/147007 A1 (ZEON CORPORATION) 03 October 2013 (2013-10-03), examples, claims | 1-11 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 October 2020 | 02 November 2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**
Information on patent family members

International application No.

PCT/JP2020/029580

| | | |
|---|---|---|
| JP 2015-118908 A | 25 June 2015 | WO 2015/008626 A1<br>claims, paragraph [0106], examples<br>KR 10-2016-0033692 A<br>claims, paragraphs [0171], [0172],<br>examples<br>CN 105378989 A |
| JP 2006-206190 A | 10 August 2006 | US 2006/0137526 A1<br>paragraphs [0004], [0031], claims<br>EP 1683641 A1<br>KR 10-2006-0076713 A<br>CN 1796138 A<br>TW 200635784 A |
| JP 11-201927 A | 30 July 1999 | (Family: none) |
| WO 2020/066954 A1 | 02 April 2020 | (Family: none) |
| WO 2013/147007 A1 | 03 October 2013 | (Family: none) |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014103122 A
- WO 2015064099 A1

- JP 2016031911 A

**Non-patent literature cited in the description**

- *Electrochemistry,* 2014, vol. 82 (11), 1007-1011